# EUROPEAN PATENT SPECIFICATION

(11) **EP 3 297 418 B1**
(45) Date of publication and mention of the grant of the patent: **28.07.2021**
(21) Application number: 16723378.2
(22) Date of filing: 19.05.2016
(51) Int. Cl.: A01G 3/08, A01G 3/033

(54) **TREE PRUNER**
HOCHENTASTER
ELAGUEUSE D'ARBRE

(30) Priority: 21.05.2015 IE 20150157
(43) Date of publication of application: 28.03.2018
(73) Proprietor: O'Driscoll, Francis, Bandon, County Cork (IE)
(72) Inventor: O'Driscoll, Francis, Bandon, County Cork (IE)
(74) Representative: Weldon O'Brien Ltd.
(86) International application number: PCT/EP2016/061249
(87) International publication number: WO 2016/184959

(56) References cited:
- WO-A1-2007/134440
- FR-A- 1 407 219
- US-A- 4 654 971
- US-A1- 2011 258 859

## Description

### INTRODUCTION

### Field of the Invention

The invention relates to tools for tree management, particularly for cutting or pruning branches of trees or hedging plants in overhead positions. More particularly, the invention relates to tree pruners of the type having an engine or motor driving a head via a rotating drive shaft.

### Prior Art Discussion

It is known to provide a tree pruner having an engine next to a handle which is held by the operator, a stem having a drive shaft surrounded by a sleeve extending from the engine, and a cutting head at the distal end of the stem. They are often referred to as "polesaw" pruners. The stem is long enough to allow cutting of branches which are in the region of 1m to 2m overhead. The engine provides power, rotating the drive shaft within a tube at the necessary speed and torque for driving of the cutting head. The head may take any of a variety of forms, such as a chainsaw, and is interchangeable. Also, the drive shaft is typically interchangeable by the operator, as they typically wear to the extent of requiring replacement after several months' of use.

Examples of such pruners are described in US6112419 (Stihl), US2002/0042997 (Uhl), and JP2003265042 (Kobayashi Tatsuo).

WO2007/134440 A1 (S. Gendron) describes a pneumatic tool for cutting. US4654971 A (Fettes) describes a telescopic engine-driven pruner. FR1407219 A (L'Entreprise Générale D'Installations) describes a secateurs or pneumatic gripper.

Unfortunately, there have been many instances of serious injury caused by the tool contacting power lines. This is especially so because much tree management activity takes place along road sides where power lines are prevalent.

The invention addresses this safety problem.

### Summary of the Invention

According to the invention, there is provided a drive shaft as set out in claim 1 and a tree pruner having such a drive shaft as set out in claim 7.

In one embodiment, the sleeve insulating material comprises fibreglass. In one embodiment, the drive shaft insulating material comprises fibreglass. In one embodiment, the drive shaft includes a section of an insulating material, said section being connected by an interface to at least one end metal section which engages the engine and/or the head.

In one embodiment, said bonding is by resin bonding material.

In one embodiment, at least one interface includes a mechanical male-female coupling. In one embodiment, the interface comprises a plug on one of the intermediate section and the end section and a socket on the other of the intermediate section and the end section. In one embodiment, the plug and the socket are co-axial with the shaft.

In one embodiment, said bonding is by resin bonding material.

In one embodiment, at least one interface includes a mechanical male-female coupling. In one embodiment, the interface comprises a plug on one of the intermediate section and the end section and a socket on the other of the intermediate section and the end section. In one embodiment, the plug and the socket are co-axial with the shaft.

### Additional Statements

According to the invention, there is provided a tree management tool comprising a drive engine or motor, a cutting head and a stem with a drive shaft linking the engine or motor to the head, wherein the stem electrically isolates the head from the engine or motor.

In one embodiment, the stem comprises a protective sleeve surrounding the drive shaft.

In another embodiment, the sleeve is of an insulating material.

In a further embodiment, the sleeve material comprises fibreglass.

In one embodiment, the drive shaft includes a section of an insulating material.

In another embodiment, the drive shaft insulated section is located between proximal and distal sections of the drive shaft.

In a further embodiment, the insulated section is of fibreglass material.

In one embodiment, the insulated section is connected to another section of the shaft by bonding and mechanical engagement.

In another embodiment, the proximal and distal sections include keys or other mechanical features for engagement with the engine or motor and the cutting head respectively.

### Detailed Description of the Invention

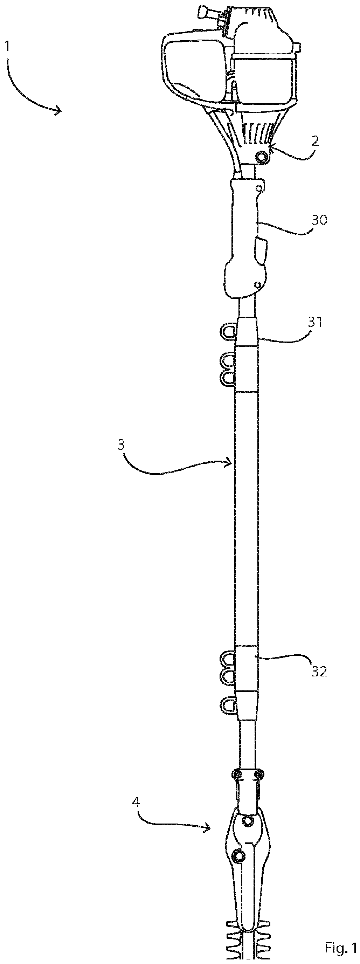

The invention will be more clearly understood from the following description of some embodiments thereof, given by way of example only with reference to the accompanying drawings in which:-
Fig. 1 is a side view of a tree pruner of the invention;
Fig. 2 is a partly cut-away sectional view of the pruner: and
Fig. 3 is a perspective view of an interface between the intermediate drive shaft section and an end section.

### Description of the Embodiments

Referring to the drawings, a tree pruner 1 comprises a petrol engine 2, a stem 3, and a cutting head 4. The stem 3 comprises a rotating drive shaft 15 surrounded by a stem tube 16.

The engine 2 is connected to the stem tube 16 by a coupler 30 incorporating a handle and a user actuating trigger. The stem 3 comprises a connecting socket 31 receiving the tube or sleeve 16, at the distal end of which there is a distal socket 32. The latter is in turn connected to the cutting head 4.

The engine 2, the couplers 30, 31, and 32, and the cutting head 7 are of known construction, in existence in many available tree pruners.

The drive shaft 15 is provided for transferring drive from the engine 2 to the cutting head 4, in a known manner. The shaft 15 extends through the sleeve 16, which provides physical safety from contact with the shaft as it rotates, as is also well known in the art.

The sleeve 16 is of an insulating material, in this case fibreglass. This material is a dielectric and so will not conduct electrical power from a cable which the pruner 1 accidently contacts.

Moreover, the drive shaft 15 is manufactured in three sections:
a proximal metal (aluminium) section 17 having a coupler (in this case keys) for engaging the engine's output shaft,
a distal metal (aluminium) section 18 also having a coupler (in this case keys) for engaging the cutting head 4 to drive the head's cutting blades, and
an intermediate section 19 of fibreglass material which is bonded and mechanically engaged at an interface at each end with the metal sections 17 and 18.

The intermediate section 19 is, like the tube 16, an electrical insulator. Hence, a combination of both the drive shaft 15 and the tube 16 being non-conductive from the head 4 to the engine 2 prevents flow of electrical current which could pose a danger to the operator.

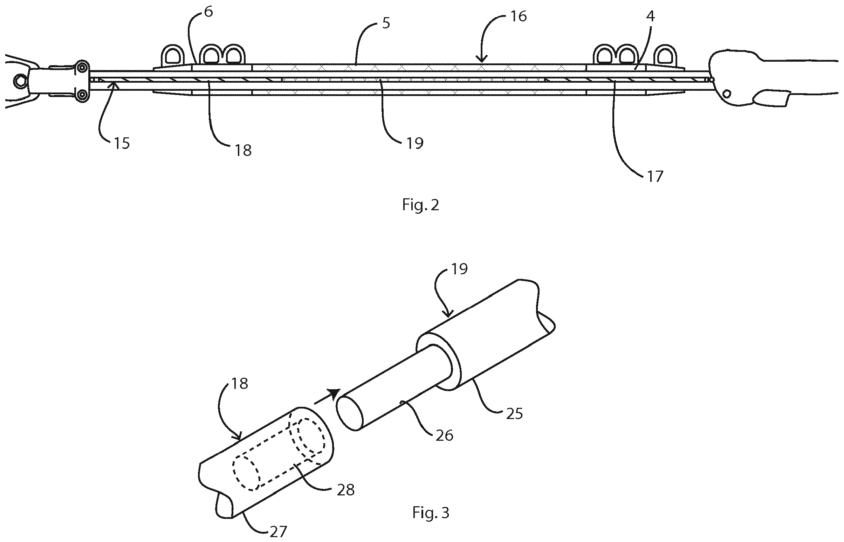

The engagement at the ends of the intermediate section 19 is preferably, as in this embodiment, a combination of resin bonding and male/female mechanical engagement. Referring to Fig. 3, in this example, the intermediate section 19 has a main rod 25 terminating at a shoulder reducing the diameter to provide a narrower plug 26 for insertion in a socket 28 in a rod 27 of the interfacing end section 18. The resin is a two part epoxy resin of type Epiglass HT9000 Fast™ by AkzoNobel. The interface is completed by axial pressure being applied until the resin has cured.

The intermediate section 19 is an electrical insulator. Hence, any contact of the cutting head 4 with a cable will not result in current travelling from the head and through the shaft 3 to the engine 2. There is therefore full electrical isolation of the head 4 from the engine 2, and hence from the user. This is a major improvement over the situation which has existed for many years with such tree management tools.

Moreover, the greatly enhanced safety is achieved without affecting the operation or maintenance of the tool. It performs the cutting actions just as effectively as conventional tools. Also, the user does not need to become acquainted with a different coupling mechanism. The joints are made between the engine, the stem, and the cutting head in the same way as for conventional pruners with an engine or motor driving a drive shaft. The tube 16 and the drive shaft 15 have the same overall physical configuration as is typical and so can be replaced by the user due to wear and tear in the conventional manner.

While the invention is simple, it solves the very difficult technical problem of providing electrical safety for polesaw pruner operators, which problem has existed for many years with deaths occurring in many countries on an annual basis. The inventor has realised that effective electrical isolation can be achieved despite the high torques and/or operating speeds of the drive shaft.

In other examples, the tool may be of a different length, or the stem may have a different width, to suit the application. The material of the sleeve and/or the drive shaft may be different, such as a plastics material of a known type having suitable electrical insulation and mechanical strength properties.

The invention, which is achieved by the appended claims, is not limited to the embodiments described but may be varied in construction and detail. The head may alternatively be driven by an electrically-power motor instead of a petrol engine. In this case the power may be provided by a battery on the pruner adjacent the motor. The invention may take the form of a stem and/or drive shaft only, to be fitted to a conventional engine and head by the user. It is preferred that the intermediate section be bonded by adhesives to the end metal sections. The drive shaft section interfaces can take any desired physical form, such as cone-shaped ends fitting into corresponding sockets in the adjoining sections. However, if the torque rating is not excessive, either bonding or mechanical only engagement may be used. It is also envisaged that the complete drive shaft may be of an insulating material, provided it is strong enough for coupling to the engine and head without excessive wear. In this, or any other embodiment, there may be a metal coating on the couplers at the ends for engagement with the engine and/or head. The couplers of the drive shaft may be of any suitable type to suit the configuration of the engine/motor and the head.

## Claims

1. A drive shaft (15) for a tree pruner, comprising a coupler at one end for engaging an engine or motor and a coupler at the other end for engaging a pruning head, and wherein the drive shaft is electrically non-conductive from one end to the other end, wherein the drive shaft comprises a proximal section (17) with said coupler for engaging an engine or motor, a distal section (18) with said coupler for engaging a pruning head, and at least one intermediate section (19) of an electrically insulating material between said proximal and distal sections and being connected to said sections by bonded interfaces.

2. A drive shaft as claimed in claim 1, wherein said bonded interfaces include resin bonding material.

3. A drive shaft as claimed in claim 2, wherein at least one interface includes a mechanical male-female coupling.

4. A drive shaft as claimed in claims 2 or 3, wherein said resin is curable with application of axial pressure.

5. A drive shaft as claimed in claim 4, wherein the interface comprises a plug (26) on one of the intermediate section and the proximal or distal section and a socket (28) on the other of the intermediate section and the proximal or distal section, and optionally the plug (26) and the socket (28) are co-axial with the shaft.

6. A drive shaft as claimed in any of claims 1 to 5, wherein at least one of said proximal and distal section is of metal or the coupler comprises a metal coating for engaging the drive engine or motor and/or the head.

7. A tree pruner (1) comprising a drive engine (2) or motor, a cutting head (4), and a stem (3) with a rotating drive shaft (15) according to any of claims 1-6 linking the engine or motor to the head, and a protective sleeve (16) surrounding the drive shaft,
wherein the protective sleeve (16) is of electrically insulating material and
the drive shaft (15) is at least partly of electrical insulating material whereby the stem (3) electrically isolates the head from the engine or motor.

8. A tree pruner as claimed in claim 7, wherein the sleeve (16) insulating material comprises fibreglass.

9. A tree pruner as claimed in claims 7 or 8, wherein the drive shaft (15) insulating material comprises fibreglass.

10. A tree pruner as claimed in any of claims 7-9, wherein the couplers comprise a metal coating which engages the drive engine or motor and/or the head.

11. A tree pruner as claimed in any of claims 7-10, wherein said bonding is by resin bonding material.

12. A tree pruner as claimed in any of claims 7-11, wherein at least one interface includes a mechanical male-female coupling (26, 28).

13. A tree pruner as claimed in claims 11 or 12, wherein said interfaces include resin which cures with application of axial pressure.

14. A tree pruner as claimed in claim 13, wherein at least one interface comprises a plug (26) on one of the intermediate section and the interfacing section and a socket (28) on the other of the intermediate section and the interfacing section.

15. A tree pruner as claimed in claim 14, wherein the plug and the socket are co-axial with the shaft.

## Patentansprüche

1. Antriebswelle (15) für eine Baumschere, die eine Kupplung an einem Ende für Eingriff mit einer Maschine oder einem Motor und eine Kupplung an dem anderen Ende für Eingriff mit einem Scherenkopf aufweist und wobei die Antriebswelle von einem Ende bis zu dem anderen Ende elektrisch nicht leitfähig ist, wobei die Antriebswelle einen proximalen Abschnitt (17) mit der genannten Kupplung für Eingriff mit einer Maschine oder einem Motor, einen distalen Abschnitt (18) mit der genannten Kupplung für Eingriff mit einem Scherenkopf und wenigstens einen Zwischenabschnitt (19) aus einem elektrisch isolierenden Material, der sich zwischen dem genannten proximalen und distalen Abschnitt befindet und durch gefügte Schnittstellen mit den genannten Abschnitten verbunden ist, aufweist.

2. Antriebswelle nach Anspruch 1, wobei die genannten gefügten Schnittstellen Harzbindemittel beinhalten.

3. Antriebswelle nach Anspruch 2, wobei wenigstens eine Schnittstelle eine mechanische Steckverbindungskupplung beinhaltet.

4. Antriebswelle nach Anspruch 2 oder 3, wobei das genannte Harz mit Anwendung von Axialdruck aushärtbar ist.

5. Antriebswelle nach Anspruch 4, wobei die Schnittstelle einen Stecker (26) an einem von dem Zwischenabschnitt und dem proximalen oder distalen Abschnitt und eine Buchse (28) an dem anderen von dem Zwischenabschnitt und dem proximalen oder distalen Abschnitt aufweist und wahlweise der Stecker (26) und die Buchse (28) mit der Welle koaxial sind.

6. Antriebswelle nach einem der Ansprüche 1 bis 5, wobei wenigstens einer von dem genannten proximalen und distalen Abschnitt aus Metall ist oder die Kupplung eine Metallbeschichtung für Eingriff mit der/dem Antriebsmaschine oder -motor und/oder dem Kopf aufweist.

7. Baumschere (1), die eine(n) Antriebsmaschine (2) oder -motor, einen Schneidkopf (4) und einen Schaft (3) mit einer rotierenden Antriebswelle (15) nach einem der Ansprüche 1 bis 6, der die Maschine oder den Motor mit dem Kopf verbindet, und eine die Antriebswelle umgebende Schutzhülle (16) aufweist,
wobei die Schutzhülle (16) aus elektrisch isolierendem Material ist und die Antriebswelle (15) wenigstens teilweise aus elektrisch isolierendem Material ist, so dass der Schaft den Kopf elektrisch von der Maschine oder dem Motor isoliert.

8. Baumschere nach Anspruch 7, wobei das isolierende Material der Hülle (16) glasfaserverstärkten Kunststoff aufweist.

9. Baumschere nach Anspruch 7 oder 8, wobei das isolierende Material der Antriebswelle (15) glasfaserverstärkten Kunststoff aufweist.

10. Baumschere nach einem der Ansprüche 7 bis 9, wobei die Kupplungen eine Metallbeschichtung aufweisen, die mit dem/der Antriebsmaschine oder -motor und/oder dem Kopf in Eingriff kommt.

11. Baumschere nach einem der Ansprüche 7 bis 10, wobei das genannte Fügen durch Harzbindemittel erfolgt.

12. Baumschere nach einem der Ansprüche 7 bis 11, wobei wenigstens eine Schnittstelle eine mechanische Steckverbindungskupplung (26, 28) beinhaltet.

13. Baumschere nach Anspruch 11 oder 12, wobei die genannten Schnittstellen Harz beinhalten, das mit Anwendung von Axialdruck aushärtet.

14. Baumschere nach Anspruch 13, wobei wenigstens eine Schnittstelle einen Stecker (26) an einem von dem Zwischenabschnitt und dem Schnittstellenabschnitt und eine Buchse (28) an dem anderen von dem Zwischenabschnitt und dem Schnittstellenabschnitt aufweist.

15. Baumschere nach Anspruch 14, wobei der Stecker und die Buchse mit der Welle koaxial sind.

## Revendications

1. Arbre d'entraînement (15) pour un ébrancheuse, comportant un coupleur à une extrémité à des fins de mise en prise d'un moteur à combustion, ou moteur électrique, et un coupleur à l'autre extrémité à des fins de mise en prise d'une tête d'ébranchage, et dans lequel l'arbre d'entraînement est électriquement non conducteur depuis une extrémité jusqu'à l'autre extrémité, dans lequel l'arbre d'entraînement comporte une section proximale (17) avec ledit coupleur à des fins de mise en prise d'un moteur à combustion, ou moteur électrique, une section distale (18) avec ledit coupleur à des fins de mise en prise d'une tête d'ébranchage, et au moins une section intermédiaire (19) en un matériau électriquement isolant entre lesdites sections proximale et distale et étant connectée auxdites sections par des interfaces de liaison.

2. Arbre d'entraînement selon la revendication 1, dans lequel lesdites interfaces de liaison comprennent un matériau de liaison à résine.

3. Arbre d'entraînement selon la revendication 2, dans lequel au moins une interface comprend un accouplement mâle femelle mécanique.

4. Arbre d'entraînement selon la revendication 2 ou la revendication 3, dans lequel ladite résine est en mesure de durcir par l'application de pression axiale.

5. Arbre d'entraînement selon la revendication 4, dans lequel l'interface comporte une fiche mâle (26) sur l'une parmi la section intermédiaire et la section proximale ou distale et une prise femelle (28) sur l'autre parmi la section intermédiaire et la section proximale ou distale, et éventuellement la fiche mâle (26) et la prise femelle (28) sont coaxiales par rapport à l'arbre.

6. Arbre d'entraînement selon l'une quelconque des revendications 1 à 5, dans lequel au moins l'une parmi lesdites sections proximale et distale est en métal ou le coupleur comporte un revêtement métallique à des fins de mise en prise du moteur à combustion, ou moteur électrique, d'entraînement et/ou de la tête.

7. Ébrancheuse (1) comportant un moteur à combustion, ou moteur électrique, d'entraînement (2), une tête de coupe (4), et une tige (3) avec un arbre d'entraînement tournant (15) selon l'une quelconque des revendications 1 à 6 reliant le moteur à combustion, ou moteur électrique, à la tête, et un manchon de protection (16) entourant l'arbre d'entraînement, dans lequel le manchon de protection (16) est en matériau électriquement isolant et l'arbre d'entraînement (15) est au moins partiellement en matériau électriquement isolant ce par quoi la tige (3) isole électriquement la tête par rapport au moteur à combustion, ou moteur électrique.

8. Ébrancheuse selon la revendication 7, dans laquelle le matériau isolant du manchon (16) comporte de la fibre de verre.

9. Ébrancheuse selon la revendication 7 ou la revendication 8, dans laquelle le matériau isolant de l'arbre d'entraînement (15) comporte de la fibre de verre.

10. Ébrancheuse selon l'une quelconque des revendications 7 à 9, dans laquelle les coupleurs comportent un revêtement métallique qui entre en prise avec le moteur à combustion, ou moteur électrique, d'entraînement et/ou la tête.

11. Ébrancheuse selon l'une quelconque des revendications 7 à 10, dans laquelle ladite liaison se fait par un matériau de liaison à résine.

12. Ébrancheuse selon l'une quelconque des revendications 7 à 11, dans laquelle au moins une interface comprend un accouplement mâle femelle mécanique (26, 28).

13. Ébrancheuse selon la revendication 11 ou la revendication 12, dans laquelle lesdites interfaces comprennent de la résine qui durcit par l'application de pression axiale.

14. Ébrancheuse selon la revendication 13, dans laquelle au moins une interface comporte une fiche mâle (26) sur l'une parmi la section intermédiaire et la section d'interface et une prise femelle (28) sur l'autre parmi la section intermédiaire et la section d'interface.

15. Ébrancheuse selon la revendication 14, dans laquelle la fiche mâle et la prise femelle sont coaxiales par rapport à l'arbre.
